# EUROPÄISCHE PATENTSCHRIFT

(11) **EP 3 722 652 B1**
(45) Veröffentlichungstag und Bekanntmachung des Hinweises auf die Patenterteilung: **14.09.2022**
(21) Anmeldenummer: 19168209.5
(22) Anmeldetag: 09.04.2019
(51) Int. Cl.: F17C 7/02

(54) **SPEICHERBEHÄLTER FÜR TIEFKALTES FLÜSSIGGAS**
STORAGE CONTAINER FOR LOW TEMPERATURE LIQUEFIED GAS
RÉCIPIENT DE STOCKAGE POUR GAZ LIQUÉFIÉ À TRÈS BASSE TEMPÉRATURE

(43) Veröffentlichungstag der Anmeldung: 14.10.2020
(73) Patentinhaber: MAGNA STEYR Fahrzeugtechnik AG & Co KG, 8041 Graz (AT)
(72) Erfinder: BARTLOK, Guido, 8010 Graz (AT)
(74) Vertreter: Zangger, Bernd

(56) Entgegenhaltungen:
- CA-A1- 2 860 682
- DE-A1- 10 321 213
- DE-A1-102006 031 860
- US-A1- 2007 261 552
- US-A1- 2013 228 151
- US-A1- 2014 096 539

## Beschreibung

### Gebiet der Erfindung

Die vorliegende Erfindung betrifft einen Speicherbehälter für tiefkaltes Flüssiggas mit einem Innentank zur Speicherung des tiefkalten Flüssiggases und mit einer Entnahmevorrichtung. Die Erfindung betrifft auch ein Kraftfahrzeug umfassend einen solchen Speicherbehälter.

### Stand der Technik

Speicherbehälter für tiefkaltes Flüssiggas, insbesondere für kryogenes Flüssiggas, sind an sich bekannt und werden insbesondere im Automobilbau eingesetzt, um Kraftstoff, beispielsweise Wasserstoff, zum Betrieb eines Antriebsmotors eines Kraftfahrzeuges bereitzustellen.

Die Umsetzung des Kraftstoffs in Antriebsenergie kann beispielsweise durch eine Verbrennungskraftmaschine oder mittels einer Brennstoffzelle und einem Elektromotor erfolgen.

Nebst den allgemein mit der Speicherung und Handhabung kryogener Medien verbundenen Problemen stellen sich speziell für den mobilen Einsatz noch weitere Probleme, insbesondere in Verbindung mit der im Fahrbetrieb laufend, und oft sehr schnell, nötigen Änderung der entnommenen Gasmenge sowie mit der dabei notwendigen Konstanthaltung des im Speicherbehälters herrschenden Druckes, insbesondere wenn dieser für die Aufrechterhaltung des Fahrbetriebes einen bestimmten Wert nicht unterschreiten darf.

Der Betriebsdruck im Inneren eines solchen Speicherbehälters bzw. dessen Innentanks muss üblicherweise größer sein, als der Versorgungsdruck für einen an den Speicherbehälter angeschlossenen Verbraucher. Durch einen hohen Druck im Innenbehälter verringert sich aber die nutzbare Speicherkapazität des Innenbehälters, da die Dichte eines tiefkalten Flüssiggases mit steigendem Druck abnimmt.

Auf Grund verschiedener technischer Herausforderungen ist es bei heutigen Tanksystemen für Flüssiggas üblich, dass die Tanksysteme eher in Richtung kleinerer Betriebsdrücke weiterentwickelt werden, wohingegen die von Verbrauchern geforderten Betriebsdrücke in der Regel steigen.

Es ist inzwischen bekannt, zur Entnahme aus dem Speicherbehälter den Druck in dessen Innerem zu erhöhen, was üblicherweise durch Beheizung des Behälterinhaltes, entweder mit Fremdenergie oder durch einen im Speicherbehälter angeordneten Wärmeübertrager bzw. Wärmetauscher erfolgt, der von bereits verdampftem Gas durchströmt sein kann. Die dazu erforderlichen Rohrleitungen müssen durch die Behälterwände hindurch geführt sein, was die Herstellung verteuert und den bei Stillstand des Fahrzeuges unerwünschten Wärmeeinfall (die "Abdampfverluste") erhöht. Ein Druckaufbau im Behälter ist nur bei gleichzeitiger Entnahme für den Verbraucher möglich. Das bedeutet in der Praxis, dass nach dem Betanken - das bei einem unter dem Betriebsdruck liegenden Druck erfolgt - dem Verbraucher zunächst nur sehr kleine Mengen zugeführt werden können.

Die DE 103 21 213 A1 offenbart einen Speicherbehälter für tiefkaltes Flüssiggas mit einer Entnahmevorrichtung, die eine Entnahmeleitung und ein im Speicherbehälter angebrachtes vertikales Rohr aufweist, dessen unteres Ende zumindest örtlich vom Boden des Speicherbehälters beabstandet ist, wobei in der unteren Region des vertikalen Rohres eine Düseneinheit vorgesehen ist, der über eine Leitung gasförmiges Gas zugeführt wird. Die Düseneinheit entlässt das warme gasförmige Gas fein verteilt in das Flüssiggas. Das durch die Düseneinheit eingeblasene Gas wird entweder einem zusätzlichen Speicherbehälter entnommen, der über die Leitung mit der Düseneinheit strömungsverbunden ist; oder die Leitung zweigt von der Entnahmeleitung ab und führt über eine Pumpe und einen ersten Wärmetauscher zu der Düseneinheit.

### Zusammenfassung der Erfindung

Es ist eine Aufgabe der Erfindung, einen Speicherbehälter für tiefkaltes Flüssiggas mit einem Innentank zur Speicherung des tiefkalten Flüssiggases und mit einer Entnahmevorrichtung anzugeben, wobei einerseits ein hoher Betriebsdruck für einen Verbraucher zur Verfügung gestellt werden soll und dabei auch große Mengen an Medium aus dem Tank entnommen werden können. Eine weitere Aufgabe ist es, ein Kraftfahrzeug umfassend einen solchen Speicherbehälter für hohe Betriebsdrucke anzugeben.

Die Lösung der Aufgabe erfolgt durch einen Speicherbehälter für tiefkaltes Flüssiggas mit einem Innentank zur Speicherung des tiefkalten Flüssiggases und mit einer Entnahmevorrichtung, wobei die Entnahmevorrichtung eine in den Innentank eintauchende Entnahmeleitung umfasst, wobei die Entnahmeleitung über eine Abzweigung mit einer Verbraucherleitung fluidverbunden ist, so dass eine Entnahme des Flüssiggases, bevorzugt zumindest großteils in flüssigem Zustand, durch einen Verbraucher an einem Anschluss der Verbraucherleitung möglich ist, wobei die Entnahmeleitung über die Abzweigung mit einer Rückführleitung fluidverbunden ist, so dass eine Rückführung des Flüssiggases, bevorzugt zumindest großteils in gasförmigem Zustand, durch die Rückführleitung in den Innentank möglich ist, wobei in der Entnahmeleitung vor der Abzweigung ein Wärmeübertrager angeordnet ist, so dass aus dem Innentank entnommenes Flüssiggas erwärmt und in die Gasphase überführt werden kann, wobei in der Entnahmeleitung vor der Abzweigung und nach dem Wärmeübertrager ein Kompressor angeordnet ist, so dass das gasförmige Flüssiggas durch den Kompressor verdichtet werden kann und ein Teilstrom des verdichteten Flüssiggases über die Verbraucherleitung zu einem Verbraucher geführt werden kann und ein anderer Teilstrom des verdichteten Flüssiggases über die Rückführleitung in den Innentank zurückgeführt werden kann.

Erfindungsgemäß ist ein Speicherbehälter mit einer Entnahmevorrichtung ausgestattet, in welcher vor einer Abzweigung, also einem Element, dass eine Aufteilung des Fluidstroms in zwei Teilströme ermöglicht, wie beispielsweise ein T-Stück, ein Wärmeübertrager und ein Kompressor angeordnet sind. Durch die Abzweigung kann das mittels Wärmeübertrager und Kompressor aufbereitete Gas sowohl über die Verbraucherleitung zum Verbraucher als auch über die Rückführleitung in den Innentank zurückgeleitet werden. Durch den Wärmeübertrager wird das dem Innenbehälter entnommene Flüssiggas erwärmt und, bevorzugt vollständig, in die Gasphase überführt. Dem Wärmeübertrager ist ein Kompressor nachgeschaltet, der das erwärmte Gas komprimiert zum Verbraucher fördert, bevorzugt zumindest großteils in flüssigem Zustand, und einen Teilstrom in den Innentank zurückführen kann, bevorzugt zumindest großteils in gasförmigem Zustand, um eine ausreichende Flüssiggasentnahme zu gewährleisten.

Durch diese Ausbildung eines Speicherbehälters kann der gewöhnliche Tankbetriebsdruck geringer sein, als der einem Verbraucher zur Verfügung stehende Betriebsdruck. Auch unabhängig von Betriebsdruckerfordernissen bietet die Erfindung immer dann eine Lösung, wenn der Tankinnendruck bzw. der Druck des entnommenen Mediums in Folge, zum Beispiel betriebsbedingter, schwankender Tankinnendrücke, beispielsweise in Folge von fortlaufender Entleerung, geringer ist, als der von einem Verbraucher geforderte Druck des Mediums bzw. des gasförmigen Mediums bzw. des Flüssiggases.

Als "Flüssiggas" wird im Rahmen der Erfindung ein Medium bezeichnet, das bei Normaldruck und Normaltemperatur gasförmig ist, durch Kühlung und/oder Kompression jedoch verflüssigt sein kann und zumindest teilweise in flüssigem Zustand im Speicherbehälter gespeichert wird. Das Flüssiggas, also das gespeicherte Medium, kann im Laufe der Bearbeitung, insbesondere der Entnahme und Rückführung, sowohl in gasförmigem Zustand als auch in flüssigem Zustand vorliegen.

Vorzugsweise ist der Kompressor dazu eingerichtet, das Gas auf einen Druck zu verdichten, der höher ist, als der Druck des Flüssiggases im Innentank bzw. höher ist, als der Tankinnendruck.

In der Rückführleitung ist bevorzugt ein Druckminderer angeordnet.

Dem Druckminderer nachgeschaltet ist in der Rückführleitung bevorzugt ein Drucksicherheitsventil angeordnet.

Ein erfindungsgemäßes Kraftfahrzeug umfasst einen Speicherbehälter wie zuvor beschrieben und einen Verbraucher, wobei der Verbraucher an die Verbraucherleitung angeschlossen ist, so dass eine Entnahme von Gas durch den Verbraucher über die Verbraucherleitung möglich ist.

Das Kraftfahrzeug umfasst bevorzugt einen Kühlfluidkreislauf, insbesondere Kühlwasserkreislauf, wobei der Kühlfluidkreislauf zur Kühlung des Verbrauchers eingerichtet ist, wobei der Kühlfluidkreislauf ferner dazu eingerichtet ist, dem Wärmeüberträger Wärme zuzuführen. Der Wärmestrom für den Wärmeübertrager kann daher durch den Kühlwasserkreislauf des Verbrauchers, insbesondere einer Brennstoffzelle, bereitgestellt werden.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines erfindungsgemäßen Speicherbehälters.
- Fig. 2: ist eine schematische Darstellung eines weiteren erfindungsgemäßen Speicherbehälters.

### Detaillierte Beschreibung der Erfindung

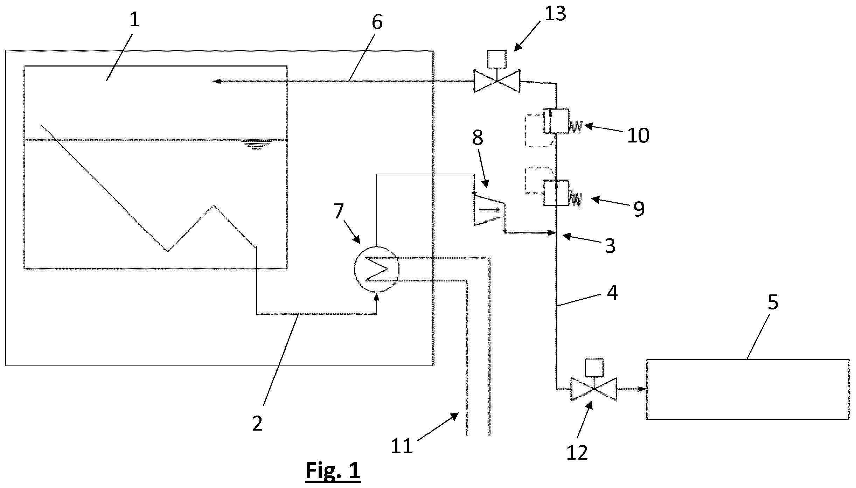

In Fig. 1 ist ein erfindungsgemäßer Speicherbehälter für tiefkaltes Flüssiggas dargestellt, der einen Innentank 1 zur Speicherung des tiefkalten Flüssiggases umfasst und eine Entnahmevorrichtung. Die Entnahmevorrichtung umfasst eine in den Innentank 1 eintauchende Entnahmeleitung 2, wobei die Entnahmeleitung 2 nicht nur über eine Öffnung am oberen Leitungsende verfügt, über welche vorzugsweise überwiegend gasförmiges Medium in die Entnahmeleitung 2 gelangen kann, sondern auch im unteren Bereich fluidleitend mit dem Innentank verbunden ist, z.B. in Form eines Bohrlochs, in welchem Bereich vorzugsweise überwiegend flüssiges Medium in die Entnahmeleitung 2 gelangen kann, wobei die Entnahmeleitung 2 über eine Abzweigung 3 einerseits mit einer Verbraucherleitung 4 fluidverbunden ist, so dass eine Entnahme von Flüssiggas durch einen Verbraucher 5 an einem Anschluss der Verbraucherleitung 4 möglich ist, und andererseits die Entnahmeleitung 2 über die Abzweigung 3 mit einer Rückführleitung 6 fluidverbunden ist, so dass eine Rückführung von Gas durch die Rückführleitung 6 in den Innentank 1 möglich ist.

In der Entnahmeleitung 2 ist vor der Abzweigung 3 ein Wärmeübertrager 7 angeordnet, so dass aus dem Innentank 1 entnommenes Flüssiggas erwärmt und vollständig in die Gasphase überführt werden kann.

In der Entnahmeleitung 2 ist vor der Abzweigung 3 und nach dem Wärmeübertrager 7 ein leistungsgesteuerter Kompressor 8 angeordnet, so dass das Gas durch den Kompressor 8 verdichtet werden kann, auf eine höhere Dichte als im Innentank 1, und ein Teilstrom des verdichteten Gases über die Verbraucherleitung 4 zu dem Verbraucher 5 geführt werden kann und ein anderer Teilstrom des verdichteten Gases über die Rückführleitung 6 in den Innentank 1 zurückgeführt werden kann.

In der Rückführleitung 6 ist ein Druckminderer 9 angeordnet, um den Druck für die Gasrückführung in den Innentank 1 zu begrenzen.

Dem Druckminderer 9 nachgeschaltet, ist in der Rückführleitung 6 zudem ein Drucksicherheitsventil 10 angeordnet.

An der Verbraucherleitung 4 ist vor dem Verbraucher 5, insbesondere im Bereich eines Anschlusses für den Verbraucher 5, ein erstes Sperrventil 12 angeordnet. An der Rückführleitung 6 ist ein zweites Sperrventil 13 angeordnet, insbesondere nach dem Druckminderer 9 und nach dem Drucksicherheitsventil 10.

Ein Kühlfluidkreislauf 11, der zur Kühlung des Verbrauchers 5 eingerichtet ist, dient dazu, dem Wärmeüberträger 7 Wärme zuzuführen.

Es kann somit ein tiefkaltes Gas oder vorzugsweise eine kryogene Flüssigkeit aus dem Innentank 1 entnommen werden und über einen Wärmeübertrager 7 geleitet werden, wobei durch Wärmezufuhr, vorzugweise mittels Kühlwassers des Verbrauchers 5, das tiefkalte Gas bzw. die kryogene Flüssigkeit vollständig in die Gasphase überführt und zugleich für den Verbraucher ausreichend erwärmt werden. Ein leistungsgesteuerter Kompressor 8 verdichtet anschließend das Gas und fördert es mit höherem Druck als im Innentank 1 zum Verbraucher 5. Um den Druck im Innentank 1 gezielt zu erhöhen oder die Entnahme von Gas oder Flüssigkeit zu ermöglichen, wird Gas über das zweite Sperrventil 13 zurück in den Innentank 1 transferiert. Um den Druck für die Gasrückführung in den Innentank 1 zu begrenzen kann bei Bedarf ein Druckminderer 9 mit nachgeschaltetem Drucksicherheitsventil 10 verbaut werden.

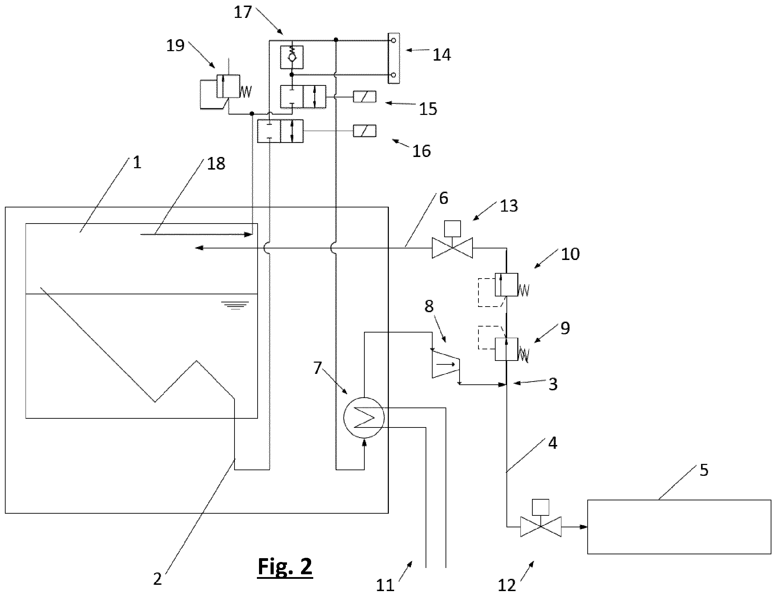

Fig. 2 zeigt eine weitere Ausführung der Erfindung, wobei der Speicherbehälter eine zusätzliche Entnahme- und Sicherheitsleitung 18 aufweist, mittels der vorzugsweise nur Gas aus dem Behälter entnommen werden kann. Hierzu wird wie in Fig. 2 dargestellt, das Gas-Absperrventil 15 betätigt bzw. kann über die Entnahme- und Sicherheitsleitung 18 und das nun fluidleitende Ventil 15 Gas aus dem Innentank 1 entnommen und zum Wärmeübertrager 7 geleitet werden. Alternativ oder vorzugsweise zusätzlich kann das Tanksystem bzw. der Speicherbehälter in der Entnahmeleitung 2 ein Absperrventil 16 aufweisen, um die Entnahme von Flüssiggas aus dem Innentank 1 über die Entnahmeleitung 2 steuern zu können bzw. deren Weiterleitung an den Wärmeübertrager 7. Sind im Tanksystem beide Absperrventile 15 und 16 vorhanden, ist es nun gezielter möglich, Medium aus dem Innentank zu entnehmen, je nach Leistungserfordernis, Tankinnendruck oder einem bevorstehenden Tankereignis etc. Befand sich beispielsweise das Fahrzeug länger im Stillstand oder beispielsweise länger in einer wärmeren Umgebung, so kann der Druck im Innentank 1 über die Maßen steigen, insbesondere über den Betriebsdruck des Tanks, woraufhin es bei Fahrtantritt für das System von Vorteil ist, wenn zuerst über das Absperrventil 15 und die Entnahmeleitung 18 Treibstoff gasförmig aus dem Innentank 1 entnommen wird bzw. zum Wärmeübertrager 7 geleitet wird. Ähnlich ist vorzugehen, wenn beispielsweise der Innendruck höher ist, aber vom Fahrer demnächst ein Tankstopp geplant ist. Diesfalls empfiehlt es sich ebenfalls während der Fahrt den Tankdruck durch Entnahme von Gas über die Entnahmeleitung 18 zu reduzieren.

Andererseits kann ein hoher Tankinnendruck wieder dazu genutzt werden, um den Kompressor 8 mit weniger Leistung betreiben zu müssen, aber trotzdem dem Verbraucher 5 Flüssiggas mit hohem, vom Verbraucher 5 geforderten Betriebsdruck, zur Verfügung zu stellen und dabei Energie zu sparen. Vorzugsweise erfolgt dazu wieder eine Gasentnahme mit geöffnetem Absperrventil 15 über die Entnahmeleitung 18. Ist aber beispielsweise vom Verbraucher 5 eine hohe Leistungsanforderung gegeben und / oder der Tankinnendruck gering, empfiehlt es sich Absperrventil 15 zu schließen und Absperrventil 16 zu öffnen und diesfalls Flüssiggas über die Entnahmeleitung 2 zu entnehmen und über den Wärmeübertrager 7 zu leiten.

Zum Schutz des Tanks ist an der Entnahmeleitung 18 ein Sicherheitsventil 19 angeordnet, welches bei Überdruck anspricht. Zur Vervollständigung des Speicherbehälters, also des Tanksystems des Kraftfahrzeuges, ist in der Ausführung gemäß Fig. 2 noch eine Betankungskupplung 14 angeordnet, welche über die Absperrventile 15 und 16 sowie die Entnahmeleitungen 2 und 18 ein Betanken des Innentanks 1 ermöglicht. Damit sich erhöhte Innentankdrücke nicht über die Betankungskupplung 14 ausgleichen bzw. über die Betankungskupplung 14 in die Umgebung geleitet werden, ist zwischen der Entnahmeleitung 18 und der Betankungskupplung 14 ein Rückschlagventil 17 angeordnet.

### Bezugszeichenliste

- 1: Innentank
- 2: Entnahmeleitung
- 3: Abzweigung
- 4: Verbraucherleitung
- 5: Verbraucher
- 6: Rückführleitung
- 7: Wärmeübertrager
- 8: Kompressor
- 9: Druckminderer
- 10: Drucksicherheitsventil
- 11: Kühlfluidkreislauf
- 12: erstes Sperrventil
- 13: zweites Sperrventil
- 14: Betankungskupplung
- 15: Absperrventil für Gas
- 16: Absperrventil für Flüssigkeit
- 17: Rückschlagventil
- 18: Entnahme- und Sicherheitsleitung
- 19: Sicherheitsventil

## Patentansprüche

1. Speicherbehälter für tiefkaltes Flüssiggas mit einem Innentank (1) zur Speicherung des tiefkalten Flüssiggases und mit einer Entnahmevorrichtung, wobei die Entnahmevorrichtung eine in den Innentank (1) eintauchende Entnahmeleitung (2) umfasst, wobei die Entnahmeleitung (2) über eine Abzweigung (3) mit einer Verbraucherleitung (4) fluidverbunden ist, so dass eine Entnahme des Flüssiggases durch einen Verbraucher (5) an einem Anschluss der Verbraucherleitung (4) möglich ist, wobei die Entnahmeleitung (2) über die Abzweigung (3) mit einer Rückführleitung (6) fluidverbunden ist, so dass eine Rückführung des Flüssiggases durch die Rückführleitung (6) in den Innentank (1) möglich ist, wobei in der Entnahmeleitung (2) vor der Abzweigung (3) ein Wärmeübertrager (7) angeordnet ist, so dass aus dem Innentank (1) entnommenes Flüssiggas erwärmt und in die Gasphase überführt werden kann, **dadurch gekennzeichnet, dass** in der Entnahmeleitung (2) vor der Abzweigung (3) und nach dem Wärmeübertrager (7) ein Kompressor (8) angeordnet ist, so dass das gasförmige Flüssiggas durch den Kompressor (8) verdichtet werden kann und ein Teilstrom des verdichteten Flüssiggases über die Verbraucherleitung (4) zu einem Verbraucher (5) geführt werden kann und ein anderer Teilstrom des verdichteten Flüssiggases über die Rückführleitung (6) in den Innentank (1) zurückgeführt werden kann.

2. Speicherbehälter nach Anspruch 1,
**dadurch gekennzeichnet, dass** der Kompressor (8) dazu eingerichtet ist, das Gas auf einen Druck zu verdichten, der höher ist, als der Druck des Flüssiggases im Innentank (1).

3. Speicherbehälter nach zumindest einem der vorhergehenden Ansprüche,
**dadurch gekennzeichnet , dass** in der Rückführleitung (6) ein Druckminderer (9) angeordnet ist.

4. Speicherbehälter nach Anspruch 3,
**dadurch gekennzeichnet , dass** in der Rückführleitung (6) ein dem Druckminderer (9) nachgeschaltetes Drucksicherheitsventil (10) angeordnet ist.

5. Speicherbehälter nach zumindest einem der vorhergehenden Ansprüche,
**dadurch gekennzeichnet , dass** die Entnahmevorrichtung eine in den Innentank (1) eintauchende Entnahme- und Sicherheitsleitung (18) umfasst, wobei die Entnahme- und Sicherheitsleitung (18) so angeordnet ist, dass mittels Entnahme- und Sicherheitsleitung (18) im Wesentlichen nur gasförmiges Flüssiggas aus dem Behälter entnommen werden kann, wobei die Entnahme- und Sicherheitsleitung (18) mit der Entnahmeleitung (2) vor dem Wärmeübertrager (7) fluidverbunden ist.

6. Speicherbehälter nach Anspruch 5,
**dadurch gekennzeichnet , dass** in der Entnahme- und Sicherheitsleitung (18) ein Absperrventil (15) angeordnet ist und/oder in der Entnahmeleitung (2) ein Absperrventil (16) angeordnet ist.

7. Speicherbehälter nach Anspruch 5 oder 6,
**dadurch gekennzeichnet , dass** die Entnahme- und Sicherheitsleitung (18) und/oder die Entnahmeleitung (2) mit einer Betankungskupplung (14) zum Betanken des Innentanks (1) fluidverbunden sind.

8. Kraftfahrzeug umfassend einen Speicherbehälter nach zumindest einem der vorhergehenden Ansprüche und einen Verbraucher (5), wobei der Verbraucher (5) an die Verbraucherleitung (4) angeschlossen ist, so dass eine Entnahme von Gas durch den Verbraucher (5) über die Verbraucherleitung (4) möglich ist.

9. Kraftfahrzeug nach Anspruch 8,
**dadurch gekennzeichnet , dass** das Kraftfahrzeug einen Kühlfluidkreislauf (11) umfasst, wobei der Kühlfluidkreislauf (11) zur Kühlung des Verbrauchers (5) eingerichtet ist, wobei der Kühlfluidkreislauf (11) ferner dazu eingerichtet ist, dem Wärmeüberträger (7) Wärme zuzuführen.

## Claims

1. Storage container for cryogenic liquid gas with an inner tank (1) for storing the cryogenic liquid gas and with an extraction device, wherein the extraction device comprises an extraction line (2) which dips into the inner tank (1), wherein the extraction line (2) is fluidically connected to a consumer line (4) via a branch point (3) so that the liquid gas can be extracted by a consumer (5) at a connection of the consumer line (4), wherein the extraction line (2) is fluidically connected to a return line (6) via the branch point (3) so that the liquid gas can be returned to the inner tank (1) via the return line (6), wherein a heat transmitter (7) is arranged in the extraction line (2) upstream of the branch point (3) so that liquid gas extracted from the inner tank (1) can be heated and transferred to the gaseous phase, **characterized in that** a compressor (8) is arranged in the extraction line (2) upstream of the branch point (3) and downstream of the heat transmitter (7) so that the gaseous liquid gas can be compressed by the compressor (8), and a partial stream of the compressed liquid gas can be conducted to a consumer (5) via the consumer line (4) and another partial stream of the compressed liquid gas can be returned to the inner tank (1) via the return line (6).

2. Storage container according to claim 1, **characterized in that** the compressor (8) is configured to compress the gas to a pressure which is higher than the pressure of the liquid gas in the inner tank (1).

3. Storage container according to at least one of the preceding claims, **characterized in that** a pressure reducer (9) is arranged in the return line (6).

4. Storage container according to claim 3, **characterized in that** a pressure safety valve (10) is arranged in the return line (6) downstream of the pressure reducer (9).

5. Storage container according to at least one of the preceding claims, **characterized in that** the extraction device comprises an extraction and safety line (18) which dips into the inner tank (1), wherein the extraction and safety line (18) is arranged such that by means of the extraction and safety line (18), substantially only gaseous liquid gas can be extracted from the container, wherein the extraction and safety line (18) is fluidically connected to the extraction line (2) upstream of the heat transmitter (7).

6. Storage container according to claim 5, **characterized in that** a shut-off valve (15) is arranged in the extraction and safety line (18) and/or a shut-off valve (16) is arranged in the extraction line (2).

7. Storage container according to claim 5 or 6, **characterized in that** the extraction and safety line (18) and/or the extraction line (2) are fluidically connected to a filling coupling (14) for filling the inner tank (1).

8. Motor vehicle comprising a storage container according to at least one of the preceding claims, and a consumer (5), wherein the consumer (5) is connected to the consumer line (4) so that gas can be extracted by the consumer (5) via the consumer line (4).

9. Motor vehicle according to claim 8, **characterized in that** the motor vehicle comprises a cooling fluid circuit (11), wherein the cooling fluid circuit (11) is configured for cooling the consumer (5), wherein the cooling fluid circuit (11) is furthermore configured to supply heat to the heat transmitter (7).

## Revendications

1. Récipient de stockage pour gaz liquéfié à très basse température avec un réservoir intérieur (1) pour le stockage du gaz liquéfié à très basse température et avec un dispositif de prélèvement, le dispositif de prélèvement comprenant une conduite de prélèvement (2) plongeant dans le réservoir intérieur (1), la conduite de prélèvement (2) étant reliée fluidiquement à une conduite de consommateur (4) par le biais d'une dérivation (3), de telle sorte qu'un prélèvement du gaz liquéfié par un consommateur (5) au niveau d'un raccordement de la conduite de consommateur (4) est possible, la conduite de prélèvement (2) étant reliée fluidiquement à une conduite de retour (6) par le biais de la dérivation (3), de telle sorte qu'un retour du gaz liquéfié dans le réservoir intérieur (1) par la conduite de retour (6) est possible, un échangeur de chaleur (7) étant agencé dans la conduite de prélèvement (2) avant la dérivation (3), de telle sorte que du gaz liquéfié prélevé hors du réservoir intérieur (1) peut être chauffé et transféré en phase gazeuse, **caractérisé en ce qu'**un compresseur (8) est agencé dans la conduite de prélèvement (2) avant la dérivation (3) et après l'échangeur de chaleur (7), de telle sorte que le gaz liquéfié sous forme gazeuse peut être comprimé par le compresseur (8) et un courant partiel du gaz liquéfié comprimé peut être acheminé vers un consommateur (5) par le biais de la conduite de consommateur (4) et un autre courant partiel du gaz liquéfié comprimé peut être retourné dans le réservoir intérieur (1) par le biais de la conduite de retour (6).

2. Récipient de stockage selon la revendication 1, **caractérisé en ce que** le compresseur (8) est conçu pour comprimer le gaz à une pression qui est supérieure à la pression du gaz liquéfié dans le réservoir intérieur (1).

3. Récipient de stockage selon au moins l'une quelconque des revendications précédentes, **caractérisé en ce qu'**un réducteur de pression (9) est agencé dans la conduite de retour (6).

4. Récipient de stockage selon la revendication 3, **caractérisé en ce qu'**une soupape de sécurité de pression (10) est agencée dans la conduite de retour (6) en aval du réducteur de pression (9).

5. Récipient de stockage selon au moins l'une quelconque des revendications précédentes, **caractérisé en ce que** le dispositif de prélèvement comprend une conduite de prélèvement et de sécurité (18) plongeant dans le réservoir intérieur (1), la conduite de prélèvement et de sécurité (18) étant agencée de telle sorte qu'essentiellement seul du gaz liquéfié sous forme gazeuse peut être prélevé hors du récipient au moyen de la conduite de prélèvement et de sécurité (18), la conduite de prélèvement et de sécurité (18) étant reliée fluidiquement à la conduite de prélèvement (2) avant l'échangeur de chaleur (7).

6. Récipient de stockage selon la revendication 5, **caractérisé en ce qu'**une soupape d'arrêt (15) est agencée dans la conduite de prélèvement et de sécurité (18) et/ou une soupape d'arrêt (16) est agencée dans la conduite de prélèvement (2).

7. Récipient de stockage selon la revendication 5 ou 6, **caractérisé en ce que** la conduite de prélèvement et de sécurité (18) et/ou la conduite de prélèvement (2) sont reliées fluidiquement à un raccord de remplissage (14) pour le remplissage du réservoir intérieur (1).

8. Véhicule automobile comprenant un récipient de stockage selon au moins l'une quelconque des revendications précédentes et un consommateur (5), le consommateur (5) étant raccordé à la conduite de consommateur (4), de telle sorte qu'un prélèvement de gaz par le consommateur (5) par le biais de la conduite de consommateur (4) est possible.

9. Véhicule automobile selon la revendication 8, **caractérisé en ce que** le véhicule automobile comprend un circuit de fluide de refroidissement (11), le circuit de fluide de refroidissement (11) étant adapté pour refroidir le consommateur (5), le circuit de fluide de refroidissement (11) étant en outre adapté pour amener de la chaleur à l'échangeur de chaleur (7).
